# EUROPÄISCHE PATENTSCHRIFT

(11) **EP 3 197 647 B1**
(45) Veröffentlichungstag und Bekanntmachung des Hinweises auf die Patenterteilung: **06.07.2022**
(21) Anmeldenummer: 15747421.4
(22) Anmeldetag: 30.07.2015
(51) Int. Cl.: B25J 15/10

(54) **GREIFERVORRICHTUNG FÜR EINE HANDHABUNGSEINRICHTUNG, HANDHABUNGSEINRICHTUNG MIT DER GREIFERVORRICHTUNG UND VERFAHREN ZUM GREIFEN EINES WERKSTÜCKS MIT DER GREIFERVORRICHTUNG**
GRIPPING DEVICE FOR A HANDLING APPARATUS, HANDLING APPARATUS HAVING THE GRIPPING DEVICE, AND METHOD FOR GRIPPING A WORKPIECE BY MEANS OF THE GRIPPING DEVICE
SYSTÈME DE PRÉHENSION DESTINÉ À UN DISPOSITIF DE MANIPULATION, DISPOSITIF DE MANIPULATION MUNI D'UN SYSTÈME DE PRÉHENSION, ET PROCÉDÉ PERMETTANT DE SAISIR UNE PIÈCE AU MOYEN DU SYSTÈME DE PRÉHENSION

(30) Priorität: 25.09.2014 DE 102014219381
(43) Veröffentlichungstag der Anmeldung: 02.08.2017
(73) Patentinhaber: Robert Bosch GmbH, 70442 Stuttgart (DE)
(72) Erfinder: RUEB, Andreas, 71254 Ditzingen (DE)
(86) Internationale Anmeldenummer: PCT/EP2015/067532
(87) Internationale Veröffentlichungsnummer: WO 2016/045833

(56) Entgegenhaltungen:
- DE-A1- 4 339 102
- FR-A1- 2 945 468
- US-A- 4 609 220

## Beschreibung

### Stand der Technik

Die Erfindung betrifft eine Greifervorrichtung für eine Handhabungseinrichtung zum Greifen eines Werkstücks mit mindestens einem ersten und einem zweiten Greiffeldabschnitt, wobei der erste Greiffeldabschnitt eine Mehrzahl von ersten Greifsegmenten aufweist und wobei der zweite Greiffeldabschnitt eine Mehrzahl von zweiten Greifsegmenten aufweist, wobei die Greifsegmente zum selbsttätigen Anpassen an das Werkstück jeweils in einer Verschieberichtung verschiebbar angeordnet sind, mit einer Aktorikeinrichtung zur Erzeugung einer Relativbewegung zwischen den ersten Greifsegmenten des ersten Greiffeldabschnitts und den zweiten Greifsegmenten des zweiten Greiffeldabschnitts. Die Erfindung betrifft auch die Handhabungseinrichtung mit der Greifervorrichtung sowie ein Verfahren zum Greifen eines Werkstücks mit der Greifervorrichtung.

Die automatisierte Bewegung von Teilen, wie sie beispielsweise beim Bearbeiten, beim Sortieren oder auch beim Verpacken von Teilen, notwendig ist, setzt stets voraus, dass das Teil von einer Automatisierungseinrichtung aufgenommen ist. Bei dem Aufnehmen des Teils ist es zum einen möglich, dass das Teil bereits zuvor in eine definierte Lage gebracht wird, aus der es von der Automatisierungseinrichtung gegriffen werden kann. Es gibt jedoch auch vielfach Anwendungen, bei denen eine definierte Ausgangslage der Teile nicht gegeben ist, zum Beispiel weil diese als ein Schüttgut vorliegen. Bei diesen Anwendungen kann vorgesehen sein, dass die Position des Teils sensorisch, zum Beispiel über Kameras, erfasst wird, eine Ausgangslage berechnet wird und nachfolgend die Automatisierungseinrichtung das Teil aus der vorberechneten Ausgangslage abholt. Derartige gesteuerte Manipulationen von Teilen durch Automatisierungseinrichtungen setzen jedoch zum einen voraus, dass die Erfassung ausreichend genau ist und zum anderen, dass die Automatisierungseinrichtung trotz eventuell vorhandener, unvorhersehbarer Störkonturen, wie zum Beispiel benachbarte Teile bei einem Schüttgut, das Teil sicher greift. Für einen Abgriff müssen zum einen Kontaktflächen des Teils zugänglich und zum anderen deren Position genau bestimmt sein, da anderenfalls die Gefahr eines fehlerhaften Abgriffs oder einer Kollision mit Nachbarteilen besteht. Des Weiteren besteht die Gefahr von Kollisionen mit Behälterwänden, in denen das Schüttgut angeordnet ist, insbesondere wenn derartige Behälter nur noch wenig gefüllt sind. Hier sind umfangreiche Berechnungen zur Kollisionsvermeidung notwendig, um ungünstig positionierte oder orientierte Gegenstände abgreifen zu können.

Es ist bekannt, Sauggreifer zu verwenden, bei denen lediglich eine Kontaktfläche auf der Oberseite des Teils zugänglich sein muss. Kollisionen werden dadurch unwahrscheinlicher und die Anzahl an abgreifbaren Teilen in einer Schüttgutszenerie steigt. Jedoch ist die Teilefixierung bei Sauggreifern je nach Teilegeometrie deutlich schlechter als bei mechanischen Klemmgreifern mit gegebenenfalls formschlüssigen Backen. Es besteht auch die Gefahr des Teileverlusts beim Transport der gegriffenen Gegenstände mit hohen Beschleunigungen. Alternativ werden Automatisierungseinrichtungen mit beweglichen Greifbacken verwendet, welche zangenähnlich gegenüberliegende Kontaktflächen am Gegenstand greifen. Hierzu müssen jedoch diese gegenüberliegenden Kontaktflächen zugänglich sein.

Eine interessante Variation einer Automatisierungseinrichtung mit beweglichen Greifbacken ist in der Druckschrift DE 10 2012 107 957 B3 bekannt. Bei dieser Automatisierungseinrichtung werden Greifbacken verwendet, welche eine Vielzahl von Stößeln aufweisen, die parallel zueinander angeordnet sind und welche in ihrer Längsrichtung verschiebbar aufgenommen sind. Die Greifbacken sind zueinander zugewandt, sodass das zu ergreifende Teil zwischen den Stößeln angeordnet ist. Durch die Kontur des Gegenstands werden bei einem Zusammenfahren der Greifbacken die Stößel entsprechend der Kontur des Teils ausgelenkt, sodass die Kontur von den Greifbacken mit den Stößeln formschlüssig aufgenommen wird. Durch einen Klemmmechanismus werden die Stößel in ihrer Position fixiert, sodass der Gegenstand formschlüssig aufgenommen von dem Greifersystem transportiert werden kann.

Die Druckschrift US 4 609 220 A offenbart eine künstliche Hand, insbesondere zur Verwendung in der Robotik, wobei die künstliche Hand eine Mehrzahl von parallelen Pins umfasst, die in bzw. an einer Transportanordnung befestigt sind. Die Pins können so verfahren werden, dass ein Objekt abgetastet werden kann und/oder alternativ das Objekt durch laterale Verschiebung der Pins aufgenommen und transportiert werden kann.

Die Druckschrift DE 43 39 102 A1, die den nächstkommenden Stand der Technik bildet, beschreibt eine Handhabungsvorrichtung zum mechanischen Greifen, Halten und Bewegen von beliebig geformten lagebestimmten oder lageunbestimmten Gegenständen, insbesondere für Industrieroboter. Die Handhabungsvorrichtung besteht im Wesentlichen aus einer großen Anzahl von, auf die zu erfassenden Gegenstände abzusenkenden Haltestiften. Die Haltestifte sind in Bohrungen einer Haltestiftführungsplatte längsverschieblich gelagert. Zwei Haltestiftführungsplatten können über Tragarme relativ zueinander verschwenkt werden.

### Offenbarung der Erfindung

Im Rahmen der Erfindung wird eine Greifervorrichtung mit den Merkmalen des Anspruchs 1, eine Handhabungseinrichtung mit den Merkmalen des Anspruchs 9 sowie ein Verfahren mit den Merkmalen des Anspruchs 10 vorgeschlagen. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Greifervorrichtung, welche für eine Handhabungseinrichtung geeignet und/oder ausgebildet ist. Die Handhabungseinrichtung ist besonders bevorzugt als ein Roboter, insbesondere als ein Pick-and-Place-Roboter, ein Knickarmroboter oder als ein kartesischer Roboter ausgebildet. Die Greifervorrichtung ist insbesondere als ein Werkzeug der Handhabungseinrichtung ausgebildet und dient zum Greifen eines Werkstücks. Bei dem Werkstück kann es sich im Rahmen eines Produktionsprozesses um ein Anfangsprodukt, um ein Zwischenprodukt oder um ein Endprodukt handeln. Es kann sich jedoch im Rahmen eines Sortierprozess, wobei das Werkstück sortiert und dann verteilt werden soll, um einen beliebigen Gegenstand oder Produkt handeln. Weitere Anwendungen der Greifervorrichtung sind ebenfalls möglich.

Die Greifervorrichtung weist mindestens einen ersten und einen zweiten Greiffeldabschnitt auf. Optional weist die Greifervorrichtung weitere Greiffeldabschnitte auf. Der erste Greiffeldabschnitt umfasst eine Mehrzahl von ersten Greifsegmenten, der zweite Greiffeldabschnitt umfasst eine Mehrzahl von zweiten Greifsegmenten. Dabei kann vorgesehen sein, dass die Anzahl der ersten und der zweiten Greifsegmente gleich oder auch unterschiedlich ausgebildet ist. In einer allgemeinen Ausprägung der Erfindung definiert der erste und der zweite Greiffeldabschnitt eine logische Zuordnung der Greifsegmente zu einer Gruppe oder zu einem Block von Greifsegmenten. Bei Weiterbildungen der Erfindung kann der erste und der zweite Greiffeldabschnitt mechanisch voneinander getrennt sein.

Die Greifsegmente des ersten und des zweiten Greiffeldabschnitts sowie gegebenenfalls weiterer Greiffeldabschnitte sind zum selbsttätigen Anpassen an das Werkstück, insbesondere an eine Kontur des Werkstücks, ausgebildet, indem diese in einer Verschieberichtung, insbesondere nachgiebig verschiebbar, angeordnet sind. Insbesondere sind die Greifsegmente unabhängig voneinander verschiebbar ausgebildet. Es ist insbesondere vorgesehen, dass bei einer Kontaktierung des ersten Greiffeldabschnitts durch ein Werkstück eine Teilmenge der ersten Greifsegmente in der Verschieberichtung verschoben werden, soweit diese deckungsgleich mit dem Werkstück, insbesondere der Kontur des Werkstücks, angeordnet sind. Die verbleibende Teilmenge der ersten Greifsegmente verbleibt dagegen in der ausgefahrenen Ausgangsposition der ersten Greifsegmente. Dadurch passen sich die ersten Greifsegmente selbsttätig an das Werkstück, insbesondere an die Kontur des Werkstücks, an. In gleicher Weise passen sich die zweiten Greifsegmente und gegebenenfalls die weiteren Greifsegmente von weiteren Greiffeldabschnitten an das Werkstück, insbesondere an die Kontur des Werkstücks, an.

Die Greifervorrichtung weist eine Aktorikeinrichtung auf, welche insbesondere durch Fremdenergie betätigt werden kann. Insbesondere kann die Aktorikeinrichtung hydraulisch, pneumatisch, elektrisch, elektromagnetisch, etc. betätigt werden. Die Aktorikeinrichtung ist zur Erzeugung einer Relativbewegung zwischen den ersten Greifsegmenten des ersten Greiffeldabschnitts und den zweiten Greifsegmenten des zweiten Greiffeldabschnitts ausgebildet. Vorzugsweise manipuliert die Aktorikeinrichtung insbesondere alle ersten Greifsegmente blockweise oder gruppenweise relativ zu insbesondere allen zweiten Greifsegmenten und/oder zu dem Block oder zu der Gruppe der zweiten Greifsegmente des zweiten Greiffeldabschnitts. Die Aktorikeinrichtung kann eine oder mehrere Einzelaktoren aufweisen. Für den Fall, dass weitere Greiffeldabschnitte hinzutreten, dient die Aktorikeinrichtung zur Erzeugung einer Relativbewegung zwischen allen am Greifen beteiligter Greiffeldabschnitten.

Im Rahmen der Erfindung wird vorgeschlagen, dass die Verschieberichtungen der Greifsegmente der mindestens zwei Greiffeldabschnitte zueinander gleichgerichtet, insbesondere parallel ausgerichtet sind. Gleichgerichtet bedeutet insbesondere, dass die Verschieberichtungen der ersten und der zweiten Greifsegmente zueinander und/oder die Verschieberichtungen der Greifsegmente des ersten Greiffeldabschnitts untereinander und/oder die Verschieberichtungen der zweiten Greifsegmente des zweiten Greiffeldabschnitts untereinander einen Winkel kleiner als 30 Grad, vorzugsweise kleiner als 15 Grad, einschließen. Insbesondere weisen die freien Enden der Greifsegmente der mindestens zwei Greiffeldabschnitte in die gleiche Richtung. Bei einem selbsttätigen Anpassen der Greifsegmente an das Werkstück weichen somit alle Greifsegmente in die gleiche, annähernd gleiche oder zumindest gleichgerichtete Verschieberichtung zurück.

Es wird ferner vorgeschlagen, dass durch die Relativverschwenkung der Greiffeldabschnitte die Greifsegmente nach dem selbsttätigen Anpassen an das Werkstück zusammengeführt werden, um das Werkstück in einer Greifposition zu halten, sodass wahlweise ein kraftschlüssiges und/oder reibschlüssiges, insbesondere klemmendes, Halten, und/oder ein formschlüssiges Halten umgesetzt wird.

Durch die vorgeschlagene Greifervorrichtung wird erreicht, dass das zu greifende Werkstück nur von einer Seite zugänglich sein muss, sodass die Zugänglichkeitsvoraussetzungen ähnlich wie bei den eingangs beschriebenen Sauggreifern sind. Das Greifen des Werkstücks erfolgt dagegen klemmend und/oder formschlüssig, sodass die Greifervorrichtung zum Einen auch bei nicht saugfähigen Werkstückoberflächen angewendet werden kann und zudem in Abhängigkeit der Klemmkraft und/oder des Formschlusses sicherer als mit dem Sauggreifer erfolgen kann. Insbesondere bei dem Abgriff von Schüttgut (Bin-Picking) treten die Vorteile der Erfindung besonders stark in den Vordergrund, da eine Zugänglichkeit der Werkstücke meist nur von einer Greifrichtung gegeben ist. Desweiteren werden die Nachteile von gegenüberliegenden Klemmbacken und den damit verbundenen Zugänglichkeitsproblemen vermieden.

Ein weiterer Vorteil ergibt sich daraus, dass durch die Relativverschwenkung der Greiffeldabschnitte zueinander und dem selbsttätigen Anpassen der Greifsegmente an das Werkstück die Anforderungen an die Positioniergenauigkeit in einer lateralen Richtung und/oder Querrichtung zu der Verschieberichtung nur sehr gering sind, sodass der Aufwand für eine Werkstückerkennung, insbesondere Werkstückpositionserkennung, gegenüber Klemmbackensystemen deutlich reduziert sind. Es genügt bei der Positionierung im Wesentlichen, dass das Werkstück von beiden Greiffeldabschnitten abgeformt wird. Die nachfolgende Relativbewegung der Greiffeldabschnitte zueinander führt zu dem Halten des Werkstücks. Insbesondere ist vorgesehen, dass das Werkstück bereits dann greifbar ist, wenn ein Teilabschnitt des Werkstücks von dem ersten Greiffeldabschnitt und ein Teilabschnitt des Werkstücks von dem zweiten Greiffeldabschnitt abgeformt ist. Ein ungewolltes Greifen von weiteren Werkstücken wird dadurch ausgeschlossen, dass nur das Werkstück als Zielwerkstück gegriffen wird, das von Greifsegmenten von den mindestens zwei Greiffeldabschnitten umschlossen und/oder abgeformt ist. Insbesondere wird nur das Werkstück als Zielwerkstück gegriffen, das in einem Zwischenbereich zwischen dem ersten und dem zweiten Greiffeldabschnitt angeordnet ist.

Zusammenfassend erlaubt die erfindungsgemäße Greifervorrichtung eine verbesserte Zugänglichkeit, insbesondere bei Schüttgütern, sowie eine Reduzierung der Anforderung an die Positioniergenauigkeit der Greifervorrichtung in Querrichtung verglichen mit dem Stand der Technik.

Bei einer bevorzugten Weiterbildung der Erfindung sind die Verschieberichtungen der Greifsegmente der mindestens zwei Greiffeldabschnitte parallel oder gleichgerichtet zu einer Greifrichtung der Greifervorrichtung zum Greifen des Werkstücks ausgerichtet. Somit ist vorgesehen, dass die Greifervorrichtung beim Greifen des Werkstücks gegen die Verschieberichtung auf das Werkstück zufährt. Allerdings erlaubt die Greifervorrichtung bevorzugt auch gewisse Toleranzen zwischen der Greifrichtung und der Verschieberichtung, sodass besonders bevorzugt vorgesehen ist, dass ein Zwischenwinkel zwischen Greifrichtung und Verschieberichtung kleiner als 30 Grad, vorzugsweise kleiner als 15 Grad, ausgebildet ist.

Bei einer bevorzugten Realisierung der Erfindung weisen die Greiffeldabschnitte jeweils mindestens zehn, vorzugsweise mindestens 15 Greifsegmente auf. Die Greifsegmente in dem Greiffeldabschnitt können beispielsweise matrixartig angeordnet sein. Bei alternativen Ausführungsformen können diese auch in verschobenen Zeilen oder Reihen zueinander angeordnet sein, sodass die Packungsdichte der Greifsegmente in den Greiffeldabschnitten erhöht ist, so dass mehr Greifsegmente pro Flächeneinheit angeordnet werden können.

Für den Fall, dass ein Greifen ausschließlich in einer lotrechten Greifrichtung erfolgt, könnte es ausreichend sein, dass die Greifsegmente frei verschiebbar in den Greiffeldabschnitten angeordnet sind. Es ist jedoch bevorzugt, dass die Greifsegmente gegen die Verschieberichtung vorgespannt sind. Beispielsweise weist jedes der Greifsegmente eine Federeinrichtung auf, welche das zugehörige Greifsegment gegen ein Verschieben in der Verschieberichtung vorspannt. Auf diese Weise wird erreicht, dass vor dem Greifen alle Greifsegmente ausgefahren sind und erst bei Kontakt mit dem Werkstück in der Verschieberichtung verschoben werden, sodass die Greiffeldabschnitte sich selbsttätig an das Werkstück, insbesondere an die Kontur des Werkstücks, anpassen. Nach dem Freigeben des Werkstücks kehren durch die Vorspannung alle Greifsegmente in die ausgefahrene Ausgangsstellung zurück.

Bei einer bevorzugten Realisierung der Erfindung sind die Greifsegmente als Stifte ausgebildet, wobei die Verschieberichtung der Längserstreckung der Stifte entspricht. Die Stifte können einen kreisrunden Querschnitt haben, alternativ und insbesondere mit Blick auf eine hohe Packungsdichte können die Querschnitte auch mehreckig, insbesondere viereckig oder sechseckig, ausgebildet sein.

In einem nicht erfindungsgemäßen Beispiel ist die Relativbewegung als eine insbesondere translatorische Relativverschiebung der Greiffeldabschnitte zueinander ausgebildet. Insbesondere erfolgt die Relativverschiebung senkrecht zu der Verschieberichtung. Durch die Relativverschiebung wird das Werkstück insbesondere durch die Seitenflächen oder Umfangsflächen der Greifsegmente zwischen den Greifsegmenten festgeklemmt oder kraft- und/oder reibschlüssig gehalten. Handelt es sich bei der Relativbewegung um eine reine Relativverschiebung, so ist das Werkstück vorzugsweise ausschließlich kraftschlüssig festgelegt. In dieser oder in anderen Ausgestaltungen kann jedoch vorgesehen sein, dass die Seitenflächen oder Umfangsflächen der Greifsegmente reibwerterhöhende Strukturen oder formschlüssig wirkende Strukturen aufweisen, um die kraftschlüssige Fixierung zu verbessern und/oder einen Formschluss in Verschieberichtung zu erreichen. Beispielsweise können die Seitenflächen der Greifsegmente aufgeraut sein oder sogar Rillen, Noppen oder andere Strukturen tragen. Es ist auch möglich, dass die Greifsegmente mit einer weiteren Schicht, wie zum Beispiel einer Gummischicht oder Kunststoffschicht, überzogen sind, welche die Strukturen trägt und/oder den Reibwert erhöht.

Erfindungsgemäß ist die Relativbewegung als eine insbesondere rotatorische Relativverschwenkung der Greiffeldabschnitte zueinander ausgebildet, wobei mindestens einer der Greiffeldabschnitte um eine Schwenkachse geschwenkt wird, welche senkrecht zu der Verschieberichtung ausgerichtet ist. Ferner ist es bevorzugt, dass die Schwenkachse derart ausgerichtet ist, dass der schwenkbare Greiffeldabschnitt mit den freien Enden der Greifsegmente gegen den anderen Greiffeldabschnitt schwenkt. In dieser Ausgestaltung werden durch die Greifsegmente des ersten und des zweiten Greiffeldabschnitts z.B. Trichterstrukturen aufgespannt. Insbesondere wird das Werkstück formschlüssig gehalten.

Bei einer möglichen Weiterbildung der Erfindung können die Greiffeldabschnitte auch zueinander gekippt angeordnet sein und durch eine insbesondere translatorische Relativverschiebung der Greiffeldabschnitte zueinander geführt werden, um das Werkstück kraftschlüssig und formschlüssig zu halten. Diese Weiterbildung nutzt den Vorteil der Trichterstruktur wie bei der vorhergehenden Weiterbildung und zugleich die einfache translatorische Relativverschiebung der ersten möglichen Ausgestaltung.

Bei einer Weiterbildung der Erfindung ist die Relativverschwenkung als eine insbesondere einheitliche Schwenkung der Greifsegmente innerhalb eines Greiffeldabschnitts ausgebildet, wobei jedes der Greifsegmente einheitlich um einen gleichen Schwenkwinkel, jedoch um jeweils eine eigene Schwenkachse verschoben oder geschwenkt wird.

Es kann vorgesehen sein, dass nur einer der Greiffeldabschnitte bewegt wird, alternativ können alle Greiffeldabschnitte oder für den Fall, dass weitere Greiffeldabschnitte hinzutreten, eine Teilmenge der Greiffeldabschnitte bewegt werden. Ferner ist es möglich, dass einer der Greiffeldabschnitte, einige der Greiffeldabschnitte oder alle Greiffeldabschnitte sowohl eine Linearbewegung als auch eine Schwenkbewegung durchführen. Auch eine Verteilung ist möglich, wobei ein Teil der Greiffeldabschnitte zum Beispiel eine Schwenkbewegung und ein anderer Teil eine Verschiebebewegung durchführt.

Bei einer möglichen Ausgestaltung der Erfindung weist die Greifervorrichtung weitere Greiffeldabschnitte auf, wobei die Greiffeldabschnitte besonderes bevorzugt in einer zentrischen Richtung, insbesondere zu einem gemeinsamen Mittelpunkt, zusammenführbar sind und/oder zusammengeführt werden. Beispielsweise ist die Greifervorrichtung als eine Vier-Greiffeldabschnitt-Greifervorrichtung ausgebildet, wobei alle Greiffeldabschnitte zu einem gemeinsamen Mittelpunkt geschwenkt werden.

Bei einer anderen möglichen konstruktiven Ausgestaltung der Erfindung weist die Greifervorrichtung eine erste und eine zweite Greiferbacke und gegebenenfalls weitere Greiferbacken auf, wobei der erste Greiffeldabschnitt auf der ersten Greiferbacke und der zweite Greiffeldabschnitt auf der zweiten Greiferbacke angeordnet ist. Die Greiferbacken sind auf einer gemeinsamen Basis positioniert. Die Aktorikeinrichtung ist beispielsweise als eine Verschiebeeinrichtung ausgebildet und ermöglicht es, mindestens eine der Greiferbacken in einer Richtung senkrecht zu der Verschieberichtung und/oder zu der Greiferrichtung zu verschieben, um die Relativverschwenkung zu erzeugen. Besonders bevorzugt werden beide, eine Auswahl oder alle Greiferbacken bewegt. Es werden eine, einige oder alle Greiferbacken senkrecht zu der Verschieberichtung geschwenkt, wobei die Schwenkachse vorzugsweise durch die Greiferbacke verläuft.

Bei einer bevorzugten Realisierung der Erfindung weist die Greifervorrichtung eine mechanische Schnittstelle zur Ankopplung an einen Roboter als Handhabungseinrichtung auf. Besonders bevorzugt ist die mechanische Schnittstelle als eine Schnellwechselschnittstelle ausgebildet und/oder umfasst elektrische Schnittstellen zur Ansteuerung der Greifervorrichtung.

Ein weiterer Gegenstand der Erfindung betrifft eine Handhabungseinrichtung zum Greifen eines Werkstücks mit der Greifervorrichtung, wie diese zuvor beschrieben wurde. In dieser Ausgestaltung ist die Greifervorrichtung als ein Werkzeug oder als ein Manipulator der Handhabungseinrichtung ausgebildet und kann durch diese örtlich versetzt werden. Insbesondere erlaubt die Handhabungseinrichtung ein Verschieben der Greifervorrichtung in Greifrichtung. Ein weiterer Gegenstand der Erfindung betrifft ein Verfahren zum Greifen eines Werkstücks mit der Greifervorrichtung und/oder der Handhabungseinrichtung nach einem der vorhergehenden Ansprüche. Bei dem Verfahren wird die Greifervorrichtung relativ zu dem Werkstück in einer Greifrichtung verfahren, wobei sich beim Auftreffen der Greifervorrichtung auf das Werkstück die Greifsegmente sich selbsttätig an das Werkstück, insbesondere an die Kontur des Werkstücks, anpassen, indem diese in der Verschieberichtung verschoben werden. Nachfolgend werden die Greiffeldabschnitte relativ zueinander verschwenkt, sodass das Werkstück zwischen den Greifsegmenten gehalten wird. Optional ergänzend wird nachfolgend das Werkstück durch die Greifervorrichtung manipuliert.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine Greifervorrichtung in einer stark schematisierten Darstellung als ein Ausführungsbeispiel der Erfindung;
Figur 2 die Greifervorrichtung in der Figur 1 bei dem nicht erfindungsgemäßen Greifen eines Werkstücks durch eine lineare Verschiebebewegung als Relativbewegung;
Figur 3 die Greifervorrichtung in der Figur 1 beim erfindungsgemäßen Greifen eines Werkstücks durch eine Schwenkbewegung als Relativbewegung;
Figur 4a, b. c schematische Darstellungen von möglichen Greifsegmenten
Figur 5 a, b, c Ausschnitte von Greiffeldabschnitten mit einer Mehrzahl von Greifsegmenten zur weiteren Erläuterung der Greifvorrichtung in der Figur 1;
Figur 6 ein weiteres Ausführungsbeispiel der Greifervorrichtung;
Figur 7 die Greiffeldabschnitte sowie die Greifsegmente der Greifervorrichtung in der Figur 6;
Figur 8 Greiffeldabschnitte mit Greifsegmenten in einer schematischen Darstellung als ein drittes Ausführungsbeispiel der Erfindung.

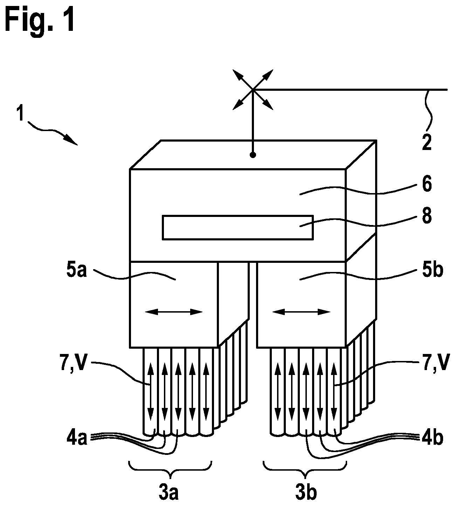

Die Figur 1 zeigt in einer stark schematisierten dreidimensionalen Darstellung eine Greifervorrichtung 1 als ein Ausführungsbeispiel der Erfindung. Die Greifervorrichtung 1 ist an einer stark schematisierten Handhabungseinrichtung 2, welche beispielsweise als ein Roboter ausgebildet ist, als Werkzeug angeordnet, sodass die Greifervorrichtung 1 über die Handhabungseinrichtung 2 verfahren werden kann.

Die Greifervorrichtung 1 weist einen ersten und einen zweiten Greiffeldabschnitt 3a, b auf, welche eine Mehrzahl von ersten und zweiten Greifsegmenten 4a, b umfassen. Die Greifsegmente 4a, b sind stabförmig oder als Stifte ausgebildet und sind in den Greiffeldabschnitten 3a, b zueinander parallel angeordnet. In dem gezeigten Beispiel weist jeder der Greiffeldabschnitte 3a, b 30 Greifsegmente 4a beziehungsweise 4b auf. Die Greifsegmente 4a, b und/oder die Greiffeldabschnitte 3a, b sind auf beziehungsweise in einer ersten und einer zweiten Greifbacke 5a, b angeordnet. Die Greifbacken 5a, b sitzen auf einer Basis 6.

Wie mit den Pfeilen 7 veranschaulicht, sind die ersten und zweiten Greifsegmente 4a, b in einer Verschieberichtung V verschiebbar angeordnet. Insbesondere können die Greifsegmente 4a, b relativ zu der Basis 6 und/oder zu den Greifbacken 5a, b verschoben werden. Die Greifsegmente 4a, b sind jeweils unabhängig voneinander verschiebbar. Die ersten und die zweiten Greifsegmente 4a, b sind somit blockweise oder gruppenweise dem jeweiligen Greiffeldabschnitt 3a, b zugeordnet. Die Greifsegmente 4a des ersten Greiffeldabschnitts 3a sind in diesem Beispiel parallel zu den Greifsegmenten 4b des zweiten Greiffeldabschnitts 3b ausgerichtet.

Die Greifervorrichtung 1 umfasst ferner eine Aktorikeinrichtung 8, welche eine Relativbewegung der Greiffeldabschnitte 3a, b zueinander ermöglicht. Bei dem in der Figur 1 gezeigten Ausführungsbeispiel wird eine nicht erfindungsgemäße der Greiffeldabschnitte 3a, b durch eine Relativbewegung der ersten und zweiten Greifbacke 5a, b zueinander umgesetzt.

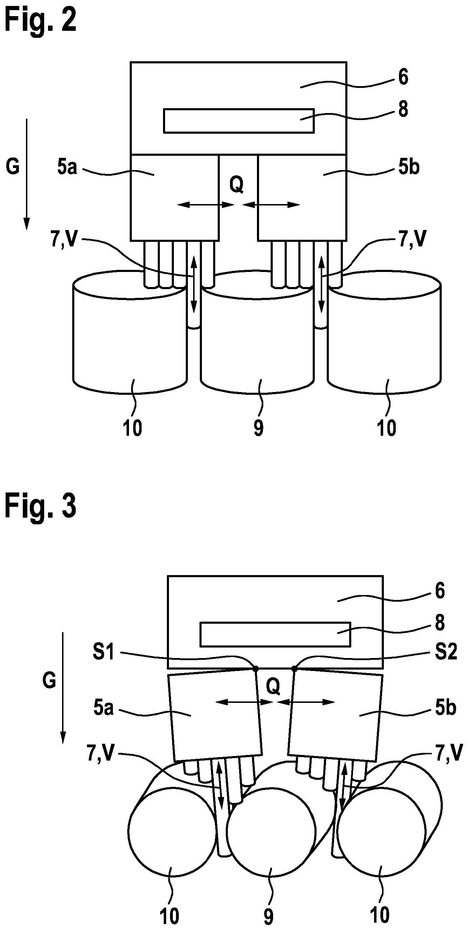

Zur Funktionsweise der Greifervorrichtung 1 wird auf die Figuren 2 und 3 verwiesen, welche die Greifervorrichtung 1 beim Greifen eines Werkstücks 9 zeigen. Zum Greifen des Werkstücks 9 wird die Greifvorrichtung 1 in einer Greifrichtung G, welche gleichgerichtet oder parallel zu der Verschieberichtung V ausgerichtet ist, auf das Werkstück 9 aufgesetzt. Beim Aufsetzen geben die Greifsegmente 4a, b durch Verschieben in der Verschieberichtung V nach und werden in den Bereich der Greifbacken 5a, b verschoben. Auf diese Weise passen sich der erste und der zweite Greiffeldabschnitt 3a, b, insbesondere die ersten und zweiten Greifsegmente 4a, b, an eine Kontur des Werkstücks 9 an. Für die danebenliegenden Störwerkstücke 10, welche nicht gegriffen werden sollen, werden die Greifsegmente 4a, b in gleicher Weise verschoben.

Nachfolgend werden in der nicht erfindungsgemäßen Funktionsweise der Figur 2 die Greiffeldabschnitte 3a, b über die Aktorrichtung 8 zueinander gefahren, indem die Greifbacken 5a, b translatorisch in einer Querrichtung Q, welche senkrecht zu der Verschieberichtung V ausgerichtet ist, aufeinander zugefahren werden. Durch die Relativbewegung der Greifbacken 5a, b und damit der Greiffeldabschnitte 3a, b und damit der ersten und zweiten Greifsegmente 4a, b zueinander wird das Werkstück 9 zwischen den Greifsegmenten 4a, b, welche nicht in Verschieberichtung V verschoben wurden oder nur teilweise verschoben wurden, geklemmt, sodass das Werkstück 9 kraftschlüssig gehalten ist. Dadurch ist das Werkstück 9 fixiert und kann durch eine entsprechende Bewegung der Handhabungseinrichtung 2 manipuliert, insbesondere bewegt, werden.

Die Figur 3 zeigt eine erfindungsgemäße Funktionsweise im Vergleich zu der Figur 2. Das Einfahren der Greifervorrichtung 1 auf das Werkstück 9 erfolgt in gleicher Weise wir zu der Figur 2 beschrieben. Statt oder ergänzend zu einer Linearbewegung zwischen den Greiffeldabschnitten 3a, b in Querrichtung Q, wie in der Figur 2, erfolgt in der Figur 3 eine Schwenkbewegung der Greiffeldabschnitte 3a, b relativ zueinander, indem die Greifbacken 5a, b jeweils um eine erste Schwenkachse S1 und um eine zweite Schwenkachse S2 relativ zu der Basis 6 verschwenkt werden. Die Schwenkachsen S1, S2 liegen parallel zueinander, sodass die freien Enden der Greifsegmente 4a, b zueinander geschwenkt werden. Durch die Relativverschwenkung der Greiffeldabschnitte 3a, b zueinander wird das Werkstück 9 formschlüssig oder formschlüssig und kraftschlüssig gegriffen.

Alternativ hierzu können die Greiffeldabschnitte 3 a, b ständig um die Schwenkachsen S1 und S2 verkippt sein, insbesondere statisch verkippt sein, und nur durch die Linearbewegung zwischen den Greiffeldabschnitten 3 a,b in Querrichtung Q zusammengefahren werden, um das Werkstück zu greifen.

Bei weiteren Ausführungsbeispielen ist es auch möglich, dass sowohl eine translatorische als auch eine schwenkende Relativbewegung zwischen den Greiffeldabschnitten 4a, b umgesetzt wird. Es soll auch unterstrichen werden, dass die Relativbewegung bedeutet, dass nur einer der Greiffeldabschnitte 4a, b und/oder eine der Greifbacken 5a, b bewegt wird oder, dass beide Greiffeldabschnitte 4a, b und/oder beide Greifbacken 5a, b bewegt werden.

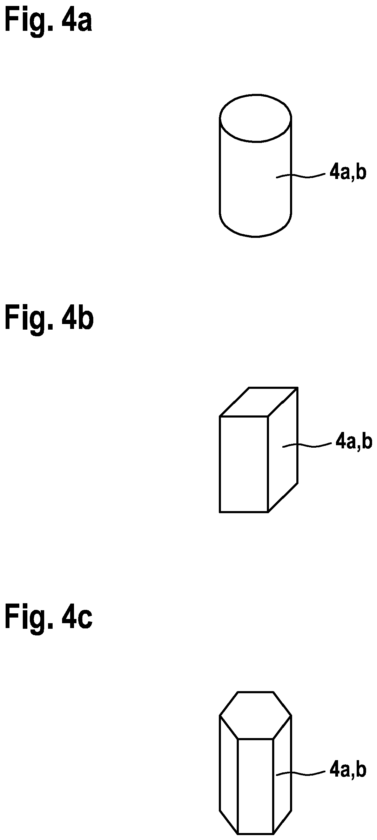

Die Figuren 4a, b, c zeigen drei mögliche Ausführungsbeispiele für die Greifsegmente 4a, b, wobei das erste Ausführungsbeispiel einen kreisrunden Querschnitt, das zweite Ausführungsbeispiel einen quadratischen Querschnitt und das dritte Ausführungsbeispiel einen sechseckigen Querschnitt aufweist.

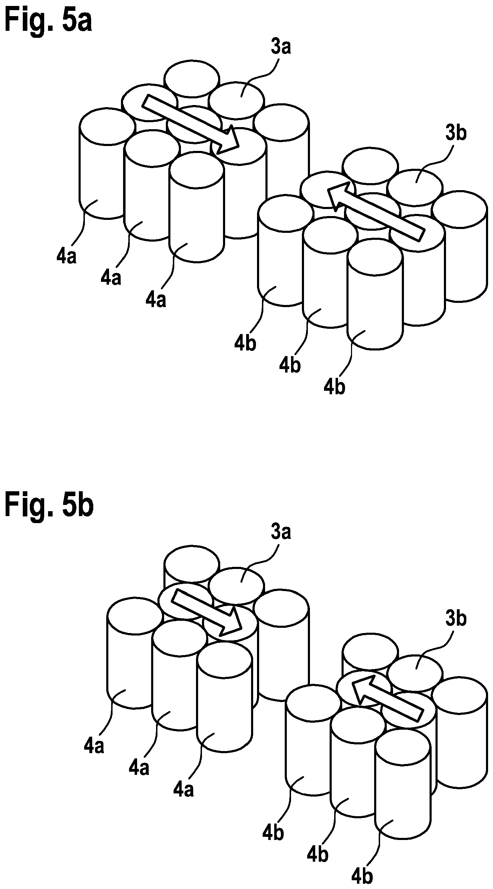

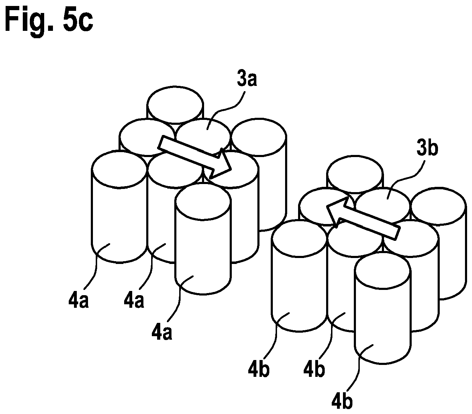

In den Figuren 5 a, b, c sind unterschiedliche Anordnungen für die Greifsegmente 4a, b in den Greiffeldabschnitten 3a, b gezeigt. In dem ersten Beispiel sind die Greifsegmente 4a, b matrixartig in Zeilen und Spalten geordnet. In dem zweiten Beispiel sind die Greifsegmente 4a, b in Zeilen geordnet, welche in der Querrichtung zueinander ausgerichtet sind, die Zeilen sind jedoch zeilenweise zueinander verschoben, um eine erhöhte Packungsdichte zu erreichen. In der dritten Beispiel sind die Greifsegmente 4a, b in Reihen geordnet, wobei die Reihen senkrecht zu der Querrichtung Q ausgerichtet sind und wobei die Reihen zueinander verschoben sind, um eine vergrößerte Packungsdichte zu erhalten.

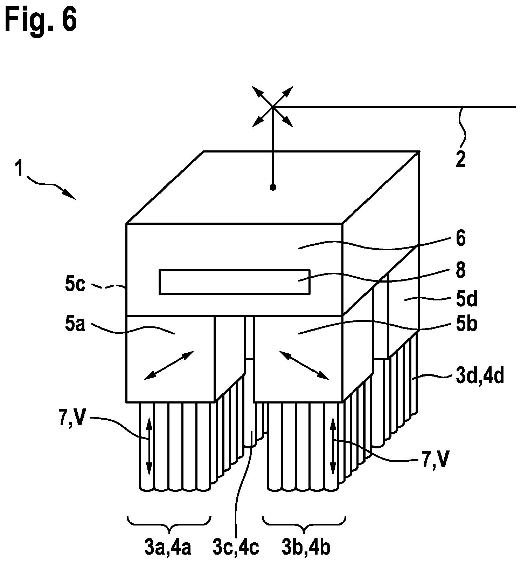

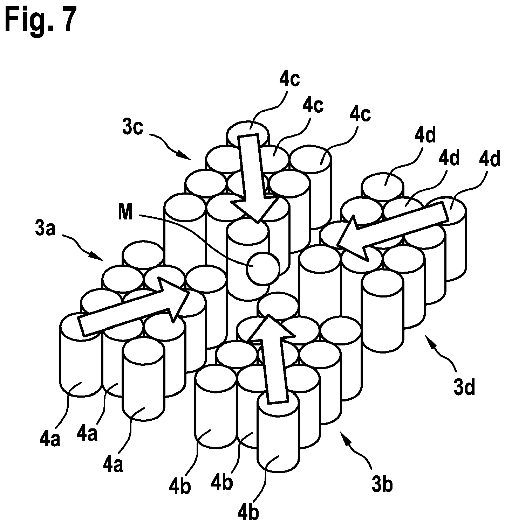

In der Figur 6 ist ein weiteres Ausführungsbeispiel der Erfindung gezeigt, welches eine Greifervorrichtung 1 mit vier Greiffeldabschnitten 3a, b, c, d zeigt, welche in einem regelmäßigen Viereck oder Quadrat angeordnet sind und welche jeweils eine Mehrzahl von Greifsegmenten 4 a, b, c, d aufweisen (Figur 7). Jedem Greiffeldabschnitt 3a, b, c, d ist eine Greifbacke 5 a, b, c, d zugeordnet. In analoger Funktionsweise zu dem Ausführungsbeispiel in der Figur 1 können die Greiffeldabschnitte 3a, b, c, d in Richtung eines gemeinsamen Mittelpunkts M geschwenkt werden, sodass ein Werkstück 9, welches sich am Mittelpunkt M befindet, von vier Seiten gehalten wird.

Sowohl bei dem Ausführungsbeispiel in der Figur 1 als auch bei dem Ausführungsbeispiel in der Figur 5 sind die Greiffeldsegmente 3a, b zueinander durch Zwischenbereiche beabstandet. Auf diese Weise kann die Anzahl der Greifsegmente 4a, b, c, d verringert werden.

Die Figur 7 zeigt in der gleichen Darstellung wie in den Figuren 5 a, b, c, d die Greifsegmente 4 a, b, c, d der Greifervorrichtung 1 in der Figur 6, wobei nochmals dargestellt ist, dass die Greiffeldabschnitte 3 a, b, c, d als eine zentrische Backenführung zu dem gemeinsamen Mittelpunkt M geführt werden können.

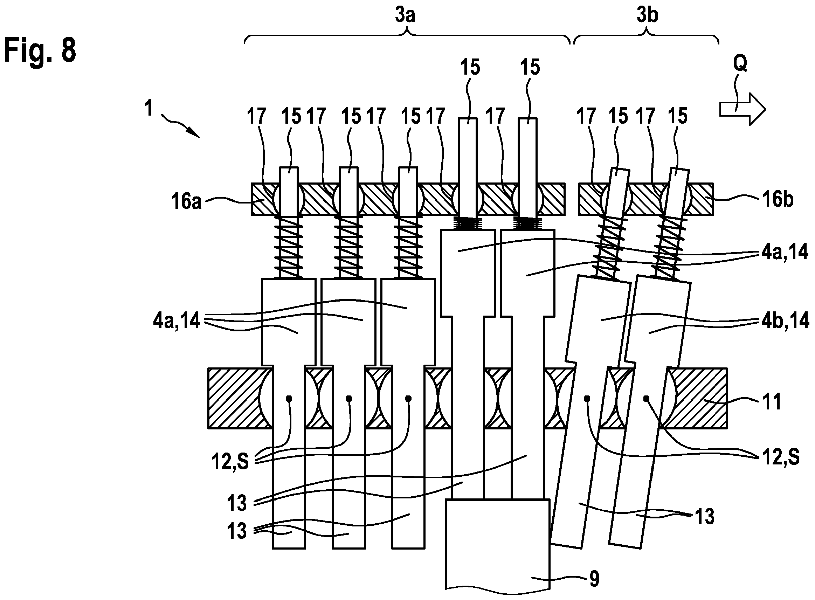

Die Figur 8 zeigt eine stark schematisierte Darstellung einer möglichen Ausführungsform der Greiffeldabschnitte 3a, b. Jeder der Greiffeldabschnitte 3a, b weist eine Mehrzahl von Greifsegmenten 4a, b auf, wobei in der Figur nur jeweils eine Zeile gezeigt ist. Die Greifsegmente 4a, b sind als Stifte ausgebildet und werden durch eine gemeinsame Grundplatte 11 geführt. Allerdings sind die Greifsegmente 4a, b in der Grundplatte 11 jeweils schwenkbar über eine Schwenkeinrichtung 12 aufgenommen, wobei für jedes Greifsegment 4a, b eine eigene Schwenkachse S individuell festgelegt ist.

Die Greifsegmente 4a, b weisen jeweils einen Greifabschnitt 13, welcher in Richtung des Werkstücks 9 übersteht sowie einen Anschlag 14, welcher oberhalb der Grundplatte 11 angeordnet ist und welcher einen Endanschlag gegen die Verschieberichtung V bildet, auf. An dem Anschlag 14 schließt sich ein Führungsabschnitt 15 an, welcher für den ersten Greiffeldabschnitt 3a durch einen ersten Führungsplattenabschnitt 16a und für den zweiten Greiffeldabschnitt 3b durch einen Führungsplattenabschnitt 16b geführt ist. Die Führungsabschnitte 15 sind in den Führungsplattenabschnitten 16a, b ebenfalls über weitere Schwenkeinrichtungen 17 gehalten. Die Schwenkeinrichtungen 12 und die weiteren Schwenkeinrichtungen 17 sind so ausgebildet, dass die Greifsegmente 4a, b in Verschieberichtung V verschoben werden können. Jedes der Greifsegmente 4 a, b weist eine Federeinrichtung 18, die die Greifsegmente in Richtung der Verschieberichtung V vorspannen. Die Federeinrichtungen 18 sind jeweils als Druckspiralfedern ausgebildet, die sich einerseits den Führungsplattenabschnitten 16 a, b und andererseits an den Anschlägen 14 abstützen.

Für eine Relativbewegung zwischen dem ersten und dem zweiten Greiffeldabschnitt 3a, b wird in diesem Beispiel der zweite Führungsplattenabschnitt 16b translatorisch von dem ersten Führungsplattenabschnitt 16a in der Querrichtung Q weg verschoben. Über die weitere Schwenkeinrichtung 17 werden die Führungsabschnitte 15 mitgenommen. Dadurch ergibt sich ein Schwenkmoment um die Schwenkeinrichtung 12 in der Grundplatte 11, sodass die Greifabschnitte 13 in eine Gegenrichtung zu der Querrichtung Q geschwenkt werden und das Werkstück 9, wie hier gezeigt, klemmend festgehalten oder, wie in der Figur 3 gezeigt, formschlüssig gehalten wird.

Die Greifervorrichtung 1 dient insbesondere dazu, Werkstücke 9, welche als ein Schüttgut und damit in einer nicht definierten Ausgangsposition vorliegen, zu ergreifen. Der Abgriff von Schüttgut wird auch als Bin-Picking bezeichnet. Mit der Greifervorrichtung 1 ist es möglich, dass die Werkstücke 9 einzeln aus ungenauen Positionen aufgenommen werden, wobei Kollisionen mit benachbarten Werkstücken 10 oder Störstrukturen toleriert werden können.

## Patentansprüche

1. Greifervorrichtung (1) für eine Handhabungseinrichtung (2) zum Greifen eines Werkstücks (9)
mit mindestens einem ersten und einem zweiten Greiffeldabschnitt (3a, b, c, d), wobei der erste Greiffeldabschnitt (3a) eine Mehrzahl von ersten Greifsegmenten (4a) aufweist und wobei der zweite Greiffeldabschnitt (3b) eine Mehrzahl von zweiten Greifsegmenten (4b) aufweist, wobei die Greifsegmente (4a, b, c, d) zum selbsttätigen Anpassen an das Werkstück (9) jeweils in einer Verschieberichtung (V) verschiebbar angeordnet sind,
mit einer Aktorikeinrichtung (8) zur Erzeugung einer Relativverschwenkung zwischen den ersten Greifsegmenten (4a) des ersten Greiffeldabschnitts (3a) und den zweiten Greifsegmenten (4b) des zweiten Greiffeldabschnitts (3b),
wobei die Verschieberichtungen (V) der Greifsegmente (4a, b, c, d) der mindestens zwei Greiffeldabschnitte (3a, b, c, d) zueinander gleichgerichtet sind und wobei durch die Relativverschwenkung der Greiffeldabschnitte (3 a, b, c, d) die Greifsegmente (4a, b, c, d) zusammenführt werden, um das Werkstück (9) in einer Greifposition zu fixieren, wobei mindestens einer der Greiffeldabschnitte (3a, b, c, d) um eine Schwenkachse (S1, S2) geschwenkt wird, welche senkrecht zu der Verschieberichtung (V) ausgerichtet ist.

2. Greifervorrichtung (1) nach Anspruch 1, **dadurch gekennzeichnet, dass** die Verschieberichtungen (V) der Greifsegmente (4 a, b, c, d) parallel oder zumindest gleichgerichtet zu einer Greifrichtung (G) der Greifervorrichtung (1) zum Greifen des Werkstücks (9) ausgerichtet sind.

3. Greifervorrichtung (1) nach Anspruch 1 oder 2, **dadurch gekennzeichnet, dass** die Greiffeldabschnitte (3 a, b, c, d) jeweils mindestens 10, vorzugsweise mindestens 15 Greifsegmente (4a, b, c, d) aufweisen.

4. Greifervorrichtung (1) nach einem der vorhergehenden Ansprüche, **dadurch gekennzeichnet, dass** die Greifsegmente (3a, b, c, d ) gegen die Verschieberichtung (V) vorgespannt sind.

5. Greifervorrichtung (1) nach einem der vorhergehenden Ansprüche, **dadurch gekennzeichnet, dass** die Greifsegmente (4 a, b, c, d) als Stifte ausgebildet sind.

6. Greifervorrichtung (1) nach einem der vorhergehenden Ansprüche, **dadurch gekennzeichnet, dass** die Relativverschwenkung eine Verschwenkung aller Greifsegmente (4 a, b, c, d) eines der Greiffeldabschnitte (3 a, b, c, d) umfasst.

7. Greifervorrichtung (1) nach einem der vorhergehenden Ansprüche, **dadurch gekennzeichnet, dass** diese weitere Greiffeldabschnitte (3 c, d) aufweist, wobei die Greiffeldabschnitte (3 a, b, c, d) in einer zentrischen Richtung (M) zusammenführbar sind und/oder zusammengeführt werden.

8. Greifervorrichtung (1) nach einem der vorhergehenden Ansprüche, **dadurch gekennzeichnet, dass** das erste Greiffeldsegment (3a) auf einem ersten Greiferbacken (5a) und das zweite Greiffeldsegment (3b) auf einem zweiten Greiferbacken (5b) angeordnet ist, wobei die Greiferbacken (5 a, b) auf einer Basis (6) angeordnet sind und wobei die Aktorikeinrichtung (8) mindestens eine der Greiferbacken (5a, b, c, d) um eine Schwenkachse (S1, S2) senkrecht zu der Verschieberichtung (V) und/oder zu der Greifrichtung (G) verschwenkt.

9. Handhabungseinrichtung (1), **gekennzeichnet durch** eine Greifervorrichtung (1) nach einem der vorhergehenden Ansprüche.

10. Verfahren zum Greifen zum Greifen eines Werkstücks (9) mit der Greifervorrichtung (1) und/oder der Handhabungseinrichtung (2) nach einem der vorhergehenden Ansprüche, wobei die Greifervorrichtung (1) relativ zu dem Werkstück (9) in einer Greifrichtung (G) verfahren wird, wobei sich beim Auftreffen der Greifervorrichtung (1) auf das Werkstück (9) die Greifsegmente (4a, b, c, d) selbsttätig an das Werkstück (9) anpassen, indem diese in der Verschieberichtung (V) verschoben werden, wobei die Greiffeldabschnitte (3 a,b, c, d) relativ zueinander verschwenkt werden, sodass das Werkstück (9) zwischen den Greifsegmenten (4 a, b, c, d) gehalten wird.

## Claims

1. Gripper apparatus (1) for a handling device (2) for gripping a workpiece (9),
having at least a first and a second gripping array portion (3a, b, c, d), wherein the first gripping array portion (3a) has a plurality of first gripping segments (4a) and wherein the second gripping array portion (3b) has a plurality of second gripping segments (4b), wherein the gripping segments (4a, b, c, d) are arranged so as each to be displaceable in a displacement direction (V) in order to automatically adapt to the workpiece (9),
having an actuator device (8) for bringing about a relative pivoting movement between the first gripping segments (4a) of the first gripping array portion (3a) and the second gripping segments (4b) of the second gripping array portion (3b),
wherein the displacement directions (V) of the gripping segments (4a, b, c, d) of the at least two gripping array portions (3a, b, c, d) are directed in the same direction as one another, and wherein, as a result of the relative pivoting movement of the gripping array portions (3a, b, c, d), the gripping segments (4a, b, c, d) are moved together in order to fix the workpiece (9) in a gripping position, wherein at least one of the gripping array portions (3a, b, c, d) is pivoted about a pivot axis (S1, S2) which is oriented perpendicularly to the displacement direction (V).

2. Gripper apparatus (1) according to Claim 1, **characterized in that** the displacement directions (V) of the gripping segments (4a, b, c, d) are oriented parallel or at least in the same direction as a gripping direction (G) of the gripper apparatus (1) for gripping the workpiece (9).

3. Gripper apparatus (1) according to Claim 1 or 2, **characterized in that** the gripping array portions (3a, b, c, d) each have at least 10, preferably at least 15 gripping segments (4a, b, c, d).

4. Gripper apparatus (1) according to one of the preceding claims, **characterized in that** the gripping segments (3a, b, c, d) are preloaded counter to the displacement direction (V).

5. Gripper apparatus (1) according to one of the preceding claims, **characterized in that** the gripping segments (4a, b, c, d) are in the form of pins.

6. Gripper apparatus (1) according to one of the preceding claims, **characterized in that** the relative pivoting movement comprises a pivoting movement of all the gripping segments (4a, b, c, d) of one of the gripping array portions (3a, b, c, d).

7. Gripper apparatus (1) according to one of the preceding claims, **characterized in that** it has further gripping array portions (3c, d), wherein the gripping array portions (3a, b, c, d) are able to be and/or are moved together in a central direction (M).

8. Gripper apparatus (1) according to one of the preceding claims, **characterized in that** the first gripping array segment (3a) is arranged on a first gripper jaw (5a) and the second gripping array segment (3b) is arranged on a second gripper jaw (5b), wherein the gripper jaws (5a, b) are arranged on a base (6) and wherein the actuator device (8) pivots at least one of the gripper jaws (5a, b, c, d) about a pivot axis (S1, S2) perpendicular to the displacement direction (V) and/or to the gripping direction (G).

9. Handling device (1), **characterized by** a gripper apparatus (1) according to one of the preceding claims.

10. Method for gripping for gripping a workpiece (9) with the gripper apparatus (1) and/or the handling device (2) according to one of the preceding claims, wherein the gripper apparatus (1) is moved in a gripping direction (G) relative to the workpiece (9), wherein, when the gripper apparatus (1) meets the workpiece (9), the gripping segments (4a, b, c, d) adapt automatically to the workpiece (9) by being displaced in the displacement direction (V), wherein the gripping array portions (3a, b, c, d) are pivoted relative to one another such that the workpiece (9) is held between the gripping segments (4a, b, c, d).

## Revendications

1. Dispositif de préhension (1) pour un appareil de manipulation (2) pour saisir une pièce (9),
comprenant au moins une première et une deuxième section de champ de préhension (3a, b, c, d), la première section de champ de préhension (3a) présentant une pluralité de premiers segments de préhension (4a) et la deuxième section de champ de préhension (3b) présentant une pluralité de deuxièmes segments de préhension (4b), les segments de préhension (4a, b, c, d) étant agencés de manière à pouvoir être déplacés chacun dans une direction de déplacement (V) pour s'adapter automatiquement à la pièce(9),
comprenant un appareil d'actionnement (8) pour produire un pivotement relatif entre les premiers segments de préhension (4a) de la première section de champ de préhension (3a) et les deuxièmes segments de préhension (4b) de la deuxième section de champ de préhension (3b), les directions de déplacement (V) des segments de préhension (4a, b, c, d) des au moins deux sections de champ de préhension (3a, b, c, d) étant orientées dans la même direction l'une par rapport à l'autre et, par le pivotement relatif des sections de champ de préhension (3a, b, c, d), les segments de préhension (4a, b, c, d) étant réunis afin de fixer la pièce (9) dans une position de préhension, au moins une des sections de champ de préhension (3a, b, c, d) étant pivotée autour d'un axe de pivotement (S1, S2) qui est orienté perpendiculairement à la direction de déplacement (V).

2. Dispositif de préhension (1) selon la revendication 1, **caractérisé en ce que** les directions de déplacement (V) des segments de préhension (4a, b, c, d) sont orientées parallèlement ou au moins dans la même direction qu'une direction de préhension (G) du dispositif de préhension (1) pour saisir la pièce (9).

3. Dispositif de préhension (1) selon la revendication 1 ou 2, **caractérisé en ce que** les sections de champ de préhension (3a, b, c, d) présentent chacune au moins 10, de préférence au moins 15 segments de préhension (4a, b, c, d).

4. Dispositif de préhension (1) selon l'une quelconque des revendications précédentes, **caractérisé en ce que** les segments de préhension (3a, b, c, d) sont précontraints à l'encontre de la direction de déplacement (V).

5. Dispositif de préhension (1) selon l'une quelconque des revendications précédentes, **caractérisé en ce que** les segments de préhension (4a, b, c, d) sont réalisés sous forme de goupilles.

6. Dispositif de préhension (1) selon l'une quelconque des revendications précédentes, **caractérisé en ce que** le pivotement relatif comprend un pivotement de tous les segments de préhension (4a, b, c, d) de l'une des sections de champ de préhension (3a, b, c, d).

7. Dispositif de préhension (1) selon l'une quelconque des revendications précédentes, **caractérisé en ce que** celui-ci présente d'autres sections de champ de préhension (3c, d), les sections de champ de préhension (3a, b, c, d) pouvant être réunies et/ou étant réunies dans une direction centrale (M).

8. Dispositif de préhension (1) selon l'une quelconque des revendications précédentes, **caractérisé en ce que** le premier segment de champ de préhension (3a) est agencé sur une première mâchoire de préhension (5a) et le deuxième segment de champ de préhension (3b) sur une deuxième mâchoire de préhension (5b), les mâchoires de préhension (5a, b) étant agencées sur une base (6) et l'appareil d'actionnement (8) amenant au moins l'une des mâchoires de préhension (5a, b, c, d) à pivoter autour d'un axe de pivotement (S1, S2) perpendiculairement à la direction de déplacement (V) et/ou à la direction de préhension (G).

9. Appareil de manipulation (1), **caractérisé par** un dispositif de préhension (1) selon l'une quelconque des revendications précédentes.

10. Procédé de préhension pour saisir une pièce (9) avec le dispositif de préhension (1) et/ou l'appareil de manipulation (2) selon l'une quelconque des revendications précédentes, le dispositif de préhension (1) étant déplacé par rapport à la pièce (9) dans une direction de préhension (G), les segments de préhension (4a, b, c, d) s'adaptant automatiquement à la pièce (9) lors de la rencontre du dispositif de préhension (1) avec la pièce (9), par le fait que ceux-ci sont déplacés dans la direction de déplacement (V), les sections de champ de préhension (3a, b, c, d) étant amenées à pivoter les unes par rapport aux autres, de telle sorte que la pièce (9) est maintenue entre les segments de préhension (4a, b, c, d) .
